# EUROPEAN PATENT APPLICATION

(11) **EP 4 686 959 A1**
(43) Date of publication of application: **04.02.2026**
(21) Application number: 24191776.4
(22) Date of filing: 30.07.2024
(51) Int. Cl.: G01S 7/4912, G01S 7/493, G01S 17/34, G01S 17/42, G01S 17/58, G01S 17/89, G01S 7/481

(54) **SYSTEM AND METHOD FOR MEASURING THE RANGE AND/OR RELATIVE VELOCITY TO AN OBJECT**

(71) Applicant: Scantinel Photonics GmbH, 89077 Ulm (DE)
(72) Inventor: Mederer, Dr. Felix, 89081 Ulm (DE)
(74) Representative: Ostertag & Partner Patentanwälte mbB

(57) **Abstract**

A LiDAR system (14) for measuring a range and/or a relative velocity to an object (12) has a light source producing light having a varying frequency, a scanning unit (18) emitting the light into different directions that correspond to pixels in an image of the object. A detector (32) detects for each pixel an interference of a measuring portion of the light, which was reflected at the object, and a reference portion of the light, which was not reflected at the object, and produces, for each pixel, an electrical signal representing the interference. A computing unit (37) determines whether the electrical signal is strong enough so that it can be reliably distinguished from a noise floor. For first pixels for which the electrical signal is strong enough, the range and/or the relative velocity to the object (12) is computed based on the electrical signals that are associated with each of the first pixels. For a second pixel for which the electrical signal is not strong enough, this information is calculated in an interpolation step based on one or more electrical signals associated with one or more first pixels.

## Description

### BACKGROUND OF THE INVENTION

### 1. Field of the Invention

The invention relates to a system and a method for measuring the range and/or relative velocity to an object based on FMCW LiDAR technology. Such systems can be used, for example, in autonomously driving vehicles and can be implemented as photonic integrated circuits (PIC) that do not contain any moving part.

### 2. Description of Related Prior Art

Frequency-modulated continuous wave (FMCW) is a range and relative velocity measuring technology which was originally developed for RADAR applications. If light instead of radio waves is used, this technology is usually referred to as FMCW LiDAR, in which LiDAR is an acronym for "Light Detection And Ranging".

In FMCW LiDAR systems, frequency-modulated light beams scan the environment. A small fraction of the light, which is diffusely reflected at an object, is received and superimposed with a local oscillator wave. Since the reflected light travels a longer path length, the two signals have a frequency difference, which is usually referred to as beat frequency. This beat frequency is measured and used to compute the range r of the object and the relative velocity *v* along the beam direction. By using a tunable laser as light source and a photodiode as detector, the beat frequency can be extracted directly from the photodiode current, because the photodiode delivers a current that is proportional to the squared sum of the two optical waves ("homodyne detection").

For various reasons, among them eye safety considerations, the intensity of the emitted light beams should not exceed certain values. For diffusely reflecting objects hundreds of meters away, the amount of reflected light reaching the detector is therefore extremely small. For obtaining reliable measurement results, all effects that have a negative impact on the signal-to-noise ratio (SNR) must be addressed.

One such effect is speckle. Speckle is a phenomenon that occurs when the reflection from the surface of an object illuminated with coherent light is diffuse rather than specular. The light is then scattered in multiple directions, creating an input signal with multiple wavefronts. Since the emitted light beams are coherent, these wavefronts interfere and cause phase and intensity variations. These variations are generally a source of bright and dark spots in the far field image, hence the term "speckle pattern".

For LIDAR systems, speckle is detrimental to the performance as it results in varying amounts of light being coupled back into the LIDAR chip. At the detector level, this can lead to signal fading, which in turn results in increased measurement inaccuracy and even to the inability to make a measurement at a given point. The presence of speckle can reduce the probability of detection (PoD) of the LiDAR system to such an extent that subsequent steps such as object detection and classification cannot be carried out.

The amount of speckle depends on several parameters, including the wavelength of the light, the roughness of the surface, the angle of incidence of the light beams on the surface, the polarization of the light, the distance of the reflecting object from the system, and also path length variations introduced by the atmosphere through which the LIDAR output signal travels.

Various approaches are known in the art to mitigate the problems caused by speckle. All approaches have in common that they aim to obtain multiple measurements and then to combine these measurements. Simply put, if the detected signal is faded in one measurement due to speckle, there is a high probability that fading will not occur in another measurement that is performed under different conditions.

An example of this approach is the LiDAR system disclosed in US 2020/0256956 A1. This system has one or more LIDAR chips that generate multiple LIDAR output signals concurrently and direct them to the same spot on the object in a field of view. The LIDAR output signals have one or more optical diversities selected from a group consisting of wavelength diversity, polarization diversity, and diversity of an angle of incidence of the LIDAR output signal on the object.

US 2019/0025426 A1 discloses an approach in which each pixel is divided into N subpixels. Separate LIDAR measurements are performed for each subpixel, and these measurements are integrated to provide a composite measurement for the pixel. The subpixels are measured sequentially or simultaneously. A single laser is used as a light source.

From US 11,940,571 B2 a LiDAR system is known in which a polarization rotating controller scrambles the state of polarization at a rate faster than the rate of data collection. This mitigates SNR fluctuation due to speckle effects. In an embodiment, two laser sources are combined, allowing a counter-chirp to be generated so that not only range, but also velocity can be measured.

### SUMMARY OF THE INVENTION

The prior art approaches to mitigate the adverse effects of speckle have in common that they require a substantial amount of additional hardware. Although often not explicitly stated, the received light must be split into its different components (for example, states of polarization) before averaging can take place. This considerably increases the complexity of the PIC layout.

Particularly in the case of polarization, there is the further problem that polarization control is often preferred to approximate the function of an optical circulator that is used in systems with a monostatic design to guide the received light towards the detector. This makes it difficult to use polarization control also for speckle reduction.

It is therefore an object of the present invention to provide an FMCW LiDAR based system and a method for measuring the range and/or the relative velocity to an object in which problems associated with speckle are mitigated with less additional hardware compared to prior art solutions.

In accordance with the present invention, the object regarding the system is achieved by a LiDAR system for measuring a range and/or a relative velocity to an object, wherein the system comprises a light source configured to produce light having a varying frequency and a scanning unit configured to emit the light produced by the light source into different directions, wherein the different directions correspond to pixels in an image of the object. The range and/or velocity information is associated with each pixel in the image. The system further comprises a detector configured to detect, for each pixel, an interference of a measuring portion of the light, which was reflected at the object, and a reference portion of the light, which was not reflected at the object, and to produce, for each pixel, an electrical signal that represents the detected interference. A computing unit is configured to determine, for each pixel, whether the electrical signal produced by the detector for the pixel is strong enough so that the electrical signal it can be reliably distinguished from a noise floor. The computing unit computes, for first pixels for which the electrical signal is strong enough, the range and/or the relative velocity to the object based on the electrical signals that are associated with each of the first pixels. The computing unit computes, for a second pixel for which the electrical signal is not strong enough, in an interpolation step the range and/or the relative velocity to the object based on one or more electrical signals which are associated with one or more first pixels.

The invention deviates from the prior art approaches in that it does not try to overcome the speckle issue by repeating measurements under different conditions, but by calculating the missing information in an interpolation step. Put differently, instead of trying, for pixels for which the electrical signal is not strong enough, to obtain measurement values that are not compromised by speckle, the invention simply calculates reasonable measurement values for these pixels. This approach is based on the assumption that for the large majority of pixels there are no sudden and large changes of the measured range and/or velocity between adjacent pixels. Such changes typically occur only at the edges of objects, but for usual scenes only a relatively small number of pixels are located on edges.

Since each interpolation for a second pixel, i.e. for a pixel for which the electrical signal is not strong enough, requires valid pixels in its vicinity, the invention will only be beneficial as long as the number of second pixels does not exceed certain limits. For example, in images in which 75% of the pixels are invalid due to speckle, it will be difficult to make interpolations.

There are many possible ways how the interpolation may be carried out. Preferably, the one or more first pixels relied upon in the interpolation step include a pixel that is spatially closest to the second pixel. This approach is based on the fact that the range and/or speed is - unless in the vicinity of edges - unlikely to change significantly over short distances.

The reliability of the interpolation will be higher if not only one, but at least two first pixels are relied upon in the interpolation step, wherein these at least two pixels are the pixels that are spatially closest to the second pixel.

Another consideration in determining the interpolation calculation is time. In LiDAR systems, many scanning units are configured to direct the light produced by the light source along a scan line over the object. The one or more first pixels relied upon in the interpolation step may then include a pixel that is immediately adjacent to the second pixel on a pixel line that corresponds to the scan line. In many cases this pixel is simultaneously the pixel that is spatially closest to the second pixel, but depending on the scan pattern, this is not always the case. For example, in zig-zag like scanning patterns in the vicinity of the turning points, the spatially closest first pixel may be a pixel that has been scanned many measurement intervals earlier. If the interpolations are based on these first pixels, the probability that the imaged scene, or the relative position between the system and the scene, has significantly changed in the meantime is higher. In such situations, it may be better to rely on one or more first pixels that are further away, but have been scanned immediately before. Put differently, the one or more first pixels relied upon in the interpolation step then include a pixel that is not spatially, closest to the second pixel, but with regard to the time of measurement. If there are at least two first pixels relied upon in the interpolation step, the computing unit may be further configured to compute the range and/or the relative velocity to the object for the second pixel based on a mean value of electrical signals which are associated with the at least two first pixels. This is the simplest way for an interpolation, at least if the two first pixels are located on opposite sides of the second pixel. In situations in which the two first pixels are located on the same side, it may also be an option to compute the values for the second pixel based on a linear regression. If there are more than two first pixels that are considered in the interpolation step, the pixels may have different "distances" from the second pixel in terms of space or time. Then it may be considered to weigh the influence of the first pixels during the interpolation depending on this "distance".

As mentioned further above, it will generally not be reasonable to interpolate in the vicinity of edges of objects where there is a sudden change of the range and/or distance values. This may be ensured by a computing unit that is configured not to perform the interpolation step if frequencies of the electrical signals that are associated with the at least two first pixels have a difference or variance which exceeds a predetermined threshold value.

In most FMCW LiDAR system the light source produces, for each pixel, light having an increasing frequency during an up-chirp interval and a decreasing frequency during a down-chirp interval. In such systems, the computing unit may be configured to perform the interpolation step independently for measurements made within the up-chirp interval and within the down-chirp interval. This is because the measurements during the two intervals usually yield quite different measurement values. Consequently, it is usually not reasonable to rely, for computing a measurement value in one of the two intervals in the interpolation step, on measurement values that have been obtained in the other interval.

With regard to the method, the above stated object is achieved by a method for measuring the range and/or the relative velocity to an object using a LiDAR system, wherein the method, comprises the following steps:
a) producing light having a varying frequency;
b) emitting the light produced by the light source into different directions, wherein the different directions correspond to pixels in an image of the object, and wherein range and/or velocity information is associated with each pixel in the image;
c) detecting, for each pixel, an interference of a measuring portion of the light, which was reflected at the object, and a reference portion of the light, which was not reflected at the object;
d) producing, for each pixel, an electrical signal that represents the detected interference;
e) determining, for each pixel, whether the electrical signal produced in step d) is strong enough so that the electrical signal it can be reliably distinguished from a noise floor;
f) computing, for first pixels for which the electrical signal is strong enough, the range and/or the relative velocity to the object based on the electrical signals that are associated with each of the first pixels;
g) computing, for a second pixel for which the electrical signal is not strong enough, in an interpolation step the range and/or the relative velocity to the object based on one or more electrical signals which are associated with one or more first pixels.

With respect to preferred and advantageous embodiments, reference is made to the foregoing discussion of the system.

### BRIEF DESCRIPTION OF THE DRAWINGS

Various features and advantages of the present invention may be more readily understood with reference to the following detailed description taken in conjunction with the accompanying drawings in which:
- Figure 1: is a schematic side view of a vehicle approaching an object which is detected by a LiDAR system;
- Figure 2: is a top view of the LiDAR system shown in Figure 1;
- Figure 3: schematically shows the layout of a LiDAR system according to an embodiment of the invention;
- Figure 4: is a graph showing the time dependency of the frequency of a light source included in the LiDAR system;
- Figure 5: is a meridional section through a scanning unit that is part of the LiDAR system of Figure 2;
- Figure 6: illustrates a typical scan pattern that is produced by the LiDAR system of Figure 2;
- Figure 7: schematically illustrates how beat frequencies are transferred into measurement values for the range and the velocity;
- Figure 8: shows the same tables as Figure 7, but now assuming that some beat frequencies are invalid;
- Figure 9: shows tables similar to Figures 7 and 8 illustrating how the interpolation step may be performed according to an embodiment of the invention;
- Figures 10a and 10b: show real images of a scene taken by the LiDAR system without and with the interpolation step, respectively.

### DESCRIPTION OF PREFERRED EMBODIMENTS

### 1. Application scenario

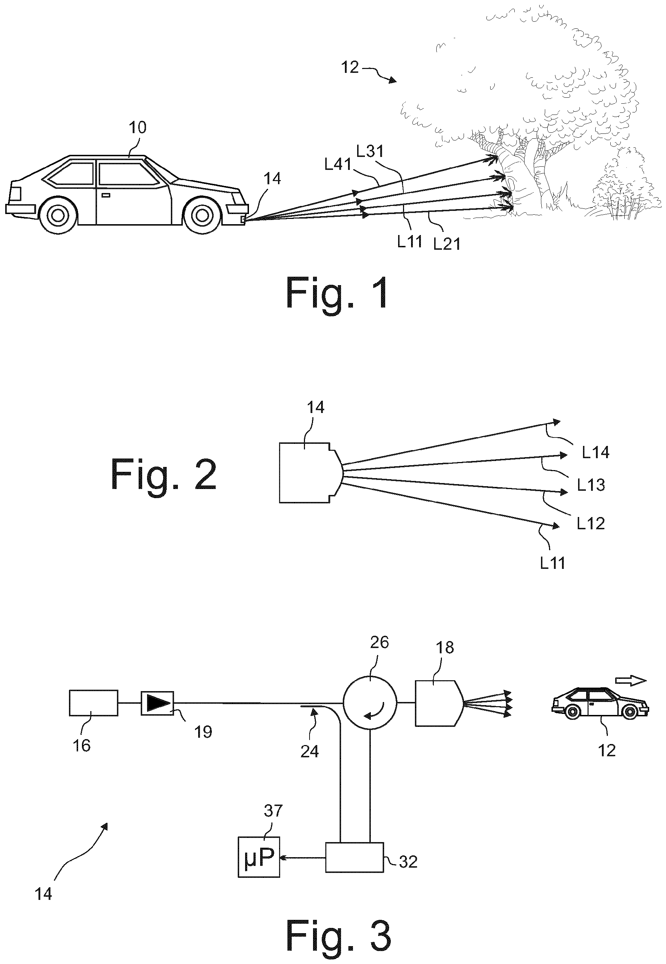

Figure 1 is a schematic side view showing a vehicle 10 that approaches an object 12 represented by a tree. The vehicle 10 has a LiDAR system 14 that scans the environment lying ahead of the vehicle 10 with light beams L11, L21, L31, and L41. From range information associated to each light beam, a three-dimensional image of the environment is computationally reconstructed. In addition, the LiDAR system 14 determines the relative velocity to the object 12 along the direction of the respective light beam L11, L21, L31, and L41. This information is particularly important if the object 12 is not fixed, but moves, too.

The information computed by the LiDAR system 14 about the environment lying ahead of the vehicle 10 may be used, for example, to assist the driver of the vehicle 10 in various ways. For example, warning messages may be generated if a collision of the vehicle 10 with the object 12 threatens. If the vehicle 10 drives autonomously, range and velocity information about the environment lying ahead are required by the algorithms that control the vehicle 10.

As is apparent in Figure 1, the LiDAR system 14 emits the light beams L11 to L41 in different directions in a vertical plane (i.e. the plane of the paper in Figure 1) so that the environment is scanned in the vertical direction. Scanning also takes place simultaneously in the horizontal direction, as Figure 2 illustrates in a top view of the LiDAR system 14. Four light beams L11, L12, L13 and L14 are emitted in a horizontal plane in different directions.

Only for the sake of simplicity it is assumed in Figures 1 and 2 that only four light beams Ln1 to Ln4 are emitted vertically and horizontally. However, in real applications that LiDAR system 14 emits many more light beams. For example, ***k***·2*ⁿ* light beams are preferred, wherein ***n*** is a natural number which is typically between 7 and 13 and specifies how many beams are emitted in one of ***k*** (horizontal or inclined) planes, wherein ***k*** is a natural number which is typically between 1 and 16.

### 2. LiDAR system

Figure 3 schematically shows the layout of the LiDAR system 14 in accordance with an embodiment of the invention and based on the FMCW principle. The LiDAR system 14 comprises a laser 16 that emits light having a frequency ***f**_{chirp}* that periodically varies ("chirps") between a lower frequency ***f**ₗ* and a higher frequency ***fₕ**.*

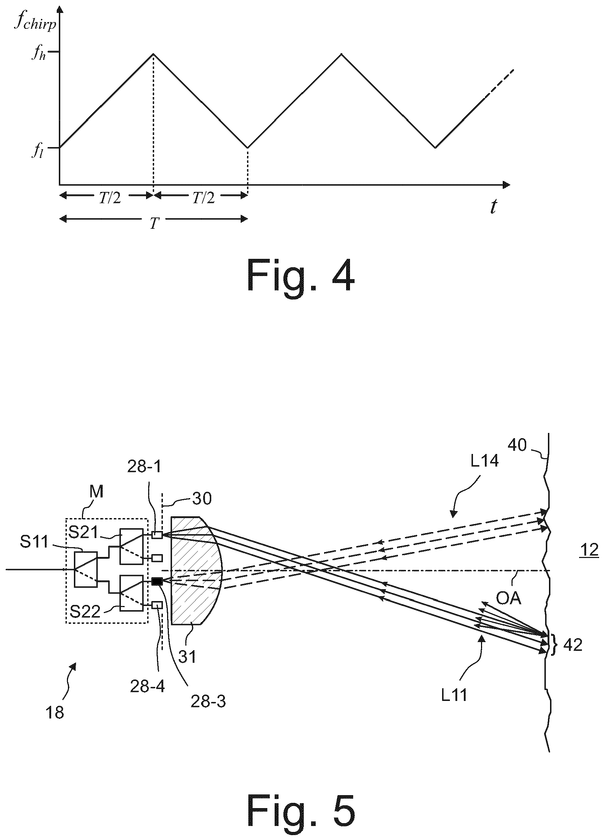

The graph of Figure 4 shows in more detail how the frequency ***f**_{chirp}* of the laser 16 varies over time ***t*** in this embodiment. Each measurement interval having a chirp duration ***T*** is divided into two halves of equal length ***T*/*2.*** During the first half, the frequency ***f**_{chirp}* increases linearly with a constant and positive up-chirp rate ***r**_{chirp}*, i.e. d***f**_{chirp}*/d***t*** = ***r**_{chirp}.* The first half is often referred to as up-chirp interval. During the second half, the frequency ***f**_{chirp}* decreases linearly with a constant negative down-chirp rate *-**r**_{chirp}*, i.e. d***f**_{chirp}*/d***t*** = ***-r**_{chirp}.* This results in a triangular wave like frequency variation as shown in Figure 4.

Two measurements, one in the up-chirp and one in the down-chirp interval, double the measurement time for each pixel (pixel correspond to directions), but with the benefit of obtaining additional velocity information.

Referring again to Figure 3, the laser 16 is connected to an optical amplifier 19 that amplifies the light. At a tap 24 a small portion of the light, which forms a reference portion (also referred to as local oscillator), is split off.

The main portion of the light is guided to an optical circulator 26 that passes the amplified light towards a scanning unit 18. An optical circulator has three ports A, B and C and has the property that light entering one port leaves the next port. Therefore, light entering port A leaves port B, light entering port B leaves port C, and light entering port C leaves port A. The optical circulator 26 may comprise a polarization sensitive beam splitter and a Faraday rotator that is arranged in the optical path upstream the scanning unit 18 so as to rotate the state of polarization by 45°, as this is known in the art as such. Another suitable approach that is also based on polarization control and approximates the function of an optical circulator is described in EP 4 174 539 A1. As will become clear from the following description, the full functionality of an optical circulator is not required.

The scanning unit 18 directs the light towards the object 12 - in Figure 3 represented by a moving car - along different directions, as it has been explained above with reference to Figures 1 and 2. Figure 5 shows an exemplary embodiment of the scanning unit 18 in a schematic meridional cross section. Four free-space couplers 28-1 to 28-4 are arranged in the front focal plane 30 of collimating optics 31, which deflect the light outcoupled from the free-space couplers 28-1 to 28-4 so that it is emitted in different directions. As a result of the arrangement in the front focal plane 30, there is an unambiguous relationship between the location of each free-space coupler 28-1 to 28-4 and the emission angle α. If the light is sequentially switched to the free-space couplers 28-1 to 28-4 using optical switches S11, S21, S22 contained in a distribution matrix M, the light collimated by the collimating optics 31 will be directed into various directions with respect to an optical axis OA of the collimating optics 31. This is indicated in Figure 5 for the free-space couplers 28-1 and 28-3 with solid lines (light beam L11) and dashed lines (light beam L13), respectively.

Scanning along the orthogonal direction (i.e. perpendicular to the plane of Figure 5) may be achieved by other means, for example a rotating prism or polygonal mirror, two-dimensional arrangements of free-space couplers, or by using gratings or other dispersive optical elements that deviate the light beams along the desired direction.

While some part of the light is usually absorbed by the object 12, another part is reflected. As long as the surface 40 of the object 12 is not perfectly smooth, diffuse reflection will occur. This ensures that some light is reflected at the object 12 such that it can propagate back to the scanning unit 18. This light portion is received by the scanning unit 18 and enters - in this embodiment - the same free-space coupler 28-1 to 28-4 from which the light was previously emitted.

Referring again to Figure 3, the reflected light travels through the switching matrix M and reaches the optical circulator 26 that directs the reflected light towards a detector 32. Because of the constantly varying frequency ***f_{chirp}*** of the light emitted by the light source 16, the frequency of the reference light portion, which was split off by the tap 24, and of the light, which has been reflected by the object 12, is slightly different. Consequently, the interference of the reference light and the reflected light results in an optical beat frequency that is detected by the detector 32 which is typically realized as a balanced detector comprising two photodiodes. The electrical signal produced by the detector 32 is fed to a computing unit 37 that computes the range ***r*** to the object and the relative velocity ***v*** between the LiDAR system 14 and the object 12 based on the detected beat frequencies.

### 3. Speckle

As has been mentioned above, the surface 40 of the object 12 is usually not perfectly smooth so that diffuse reflection occurs. The light is thus scattered in multiple directions, as this is indicated in Figure 5 for one of the impinging light rays constituting the light beam L11. Moreover, the light beam L11 itself has a significant diameter and illuminates a spot 42 on the object 12 that is typically a few millimeters to a few centimeters wide. Since the light emitted from each free-space coupler 28-1 to 28-4 is coherent, the wavefronts associated with the differently reflected light portions interfere and cause phase and intensity variations. At the free-space couplers 28-1 to 28-4, the wavefronts may constructively interfere, for example at free-space coupler 28-1, but with the same probability may destructively interfere, for example at free-space coupler 28-3 shown in black. Whether the interference is constructive or destructive depends on the relative phases of each scattered wavefront. Since the relative phases are usually randomly distributed, the probabilities for partial or complete constructive interference and partial or complete destructive interference are generally identical.

Destructive interference implies that less or no light at all can be received by a free-space coupler 28-1 to 28-4. Since a certain fading can usually be tolerated, not 50%, but significantly more measurement values can be used for the range and velocity measurement. However, in the presence of speckle a certain percentage of beat signals cannot be sufficiently distinguished from noise and must be discarded as invalid. In this context it should be noted that in most FMCW LiDAR systems, one beat signal is obtained during the up-chirp interval and another beat signal is obtained during the down-chirp interval. However, both beat signals are required for determining range and velocity. Consequently, even if one of the two beat signals is invalid, there will be no range or velocity information for this pixel.

In that case the range and velocity images taken from the environment will contain a number of black dots. If the number of black dots is too large, it can be difficult to detect lines and structures and to classify objects.

### 4. Interpolation

In order to mitigate this problem, the computing unit 37 of the system 14 calculates the missing information in an interpolation step. In this step, reasonable measurement values are calculated for invalid pixels, i.e. pixels for which the electrical signal is not strong enough, on the basis of valid pixels that are not compromised by speckle.

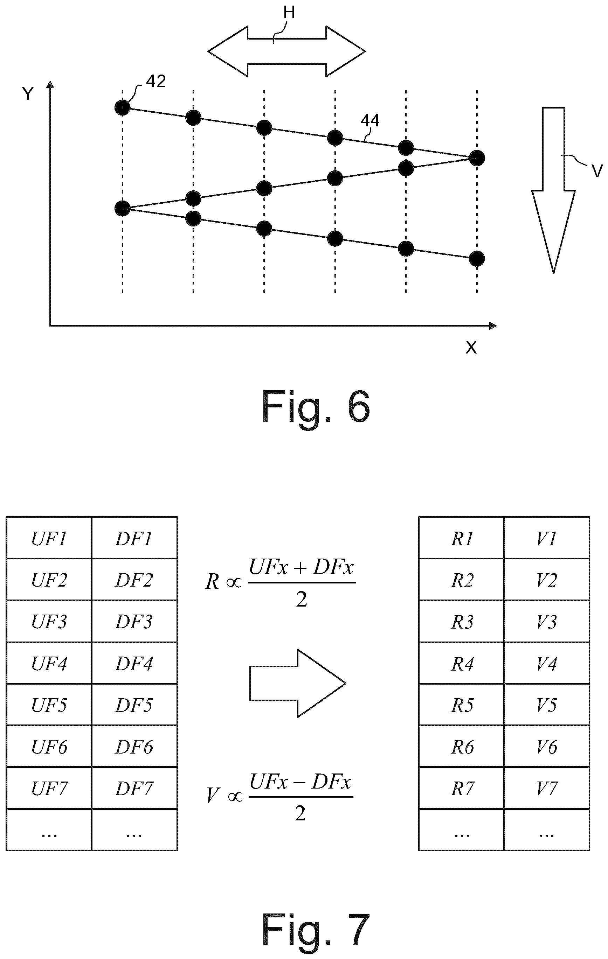

Figure 6 illustrates a typical scan pattern that is produced by the system 14. It is assumed that scanning along the horizontal direction H is achieved by switching between the free-space couplers 28-1 to 28-4 as shown in Figure 5, and scanning along the vertical direction V is achieved with the help of a moving mirror. The scan line 44 thus results from a superposition of a periodic scan movements along the horizontal direction H from the left to the right, then back to the left, and so on, and a continuous movement along the vertical direction V.

During the scan process, the light beam illuminates spots 42 on the object 12. Each spot 42 is directly associated with a pixel, wherein each pixel corresponds to a particular scan direction and hence to a position in an image of the object 12.

In multi-channel systems in which several light beams are emitted simultaneously, the total scan pattern may be assembled from a corresponding plurality of scan patterns as shown in Figure 6.

Figure 7 illustrates how the beat frequencies *UFx, DFx,* which are obtained by Fourier transform from the beat signals measured by the detector (32) during the up-chirp and the down-chirp interval, are transferred into measurement values *Rrx* for the range and measurement values *vx* for the velocity. As can be seen from the upper formular in Figure 7, the range value *rx* is proportional to mean value of the beat frequency *UFx* for the up-chirp interval and the beat frequency *DFx* for the down-chirp interval. The velocity value *Vx* is proportional to half the difference between the beat frequencies *UFx* and *DFx.* Here the variable *x* indicates the scan position or pixel. The two tables of Figure 7 illustrate that each spot 42 (or scan position x) is associated with a pair of beat frequencies *UFx, DFx* on the input side and a pair of range and velocity values *Rr, Vx* on the output side.

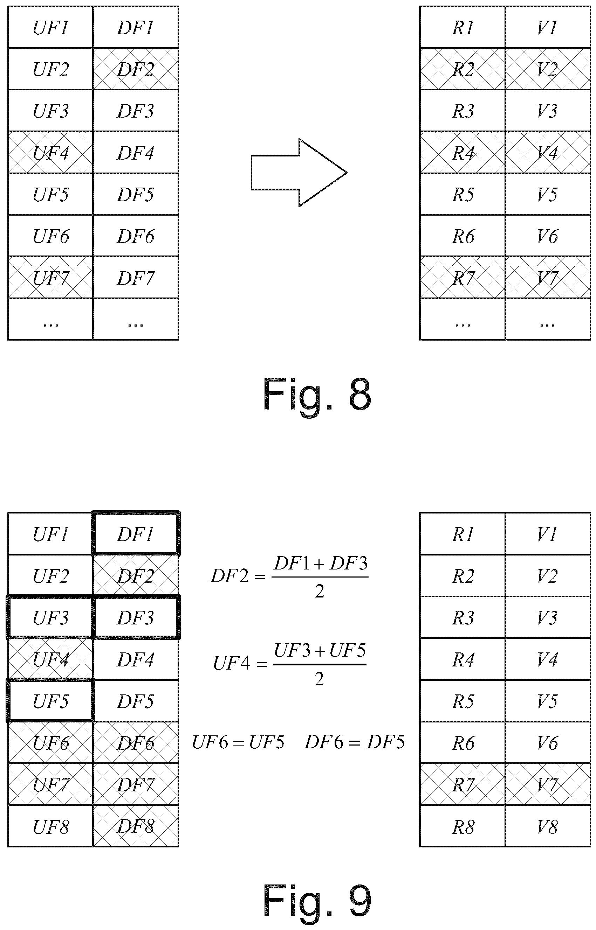

Figure 8 shows the same tables as Figure 7, but now assuming that some beat frequencies are invalid because the electrical signal produced by the detector 32 was not strong enough e.g. due to speckle. Not strong enough means in this context that the electrical signal cannot by reliably distinguished from a noise floor. This equally applies to electrical signals obtained after Fourier transform and directly representing the beat frequencies.

More specifically, the beat frequencies *DF2, UF4* and *UF7* are invalid, which is represented in Figure 8 by a diamond hatching. As two valid beat frequencies *DFx, UFx* are required for computing the range and velocity according to the formulas shown in Figure 7, there will be three scan positions x = 2, 4 and 7 indicated by a diamond hatching for which neither a range nor a velocity can be calculated. This results in a very severe reduction of the probability of detection (PoD). It should be noted in this context that although only 3/14 ≈ 21% of the measured signals were invalid in this example, there are twice as many (namely, 3/7 ≈ 42%) scan positions for which neither a range nor a velocity can be calculated.

The invention overcomes this problem by performing an interpolation step that will be explained in the following with reference to Figure 9.

Here it is assumed that not only the beat frequencies *DF2, UF4* and *UF7,* but also the beat frequencies *UF6, DF6, DF7* and *DF8* are invalid.

Since the beat frequencies *UFx* for the up-chirp interval and the beat frequencies *DFx* for the down-chirp interval represent different physical quantities, no interpolation is possible between up-chirp and down-chirp beat frequencies. However, since the spots 42 of subsequent measurements during the scan process are usually arranged at close distance (see Figure 6), the assumption can be made that at least immediately adjacent spots 42 have range and velocity values that do not differ substantially.

In the embodiment illustrated in Figure 9, the invalid beat frequency *DF2* is "replaced" by the mean value of the valid beat frequencies *DF1* and *DF3* of the immediately adjacent spots 42. Similarly, the invalid beat frequency *UF4* is "replaced" by the mean value of the valid beat frequencies *UF3* and *UF5* of the immediately adjacent spots 42.

In this embodiment, invalid beat frequencies are calculated also if there is only one valid beat frequency of an immediately adjacent spot. For example, the beat frequency *UF6* is assumed to be identical to the beat frequency *UF5,* and similarly the beat frequency *DF6* is assumed to be identical to the beat frequency *DF5.*

As mentioned further above, it will generally not be reasonable to interpolate in the vicinity of edges where the beat frequencies *UFx* and *DFx* suddenly change. This may be ensured by checking whether the beat frequencies of adjacent spots 42 are similar. If the difference between the beat frequencies exceeds a predetermined threshold value, no interpolation should be performed.

This checking step is simple in cases where the interpolation involves the calculation of a mean value. In the scenario illustrated in Figure 9, for example, the invalid beat frequency *DF2* should be "replaced" by the mean value of the valid beat frequencies *DF1* and *DF3* only if
*abs*(*DF1-DF3*) < *Fₜₕᵣ* wherein *Fₜₕ* denotes said threshold value that must be suitably defined in advance.

If interpolation takes place on the basis of a single valid beat frequency, as this was explained above for the beat frequency *DF6,* for example, the checking step may involve more complex considerations. In that case, it may be envisaged to look for other indications whether there might be a sudden change of the beat frequencies or not. For beat frequency *DF6,* a sudden change is unlikely if the closest valid the up-chirp beat frequencies *UF5* and *UF8* are similar.

The table on the right side of Figure 9 shows that after the interpolation step, there is only one scan position *x* = 7 for which neither a range nor a velocity can be calculated. All other range and velocity values can be determined although the number of invalid beat frequencies is even higher compared to the conventional approach shown in Figure 8.

It should be noted that other interpolation schemes are possible. In Figure 6 it can be seen that the spots 42 that are immediately adjacent along the scan line 44 are not necessarily the spots that are spatially closest. For example, in the vicinity of the turning points of the scan line 44, the spatially closest spots 42 are not those that were scanned immediately before or after, but those that are further away on the time scale. If not too much time has elapsed, it may be prudent to us these spots 42 or scan positions x for the interpolation.

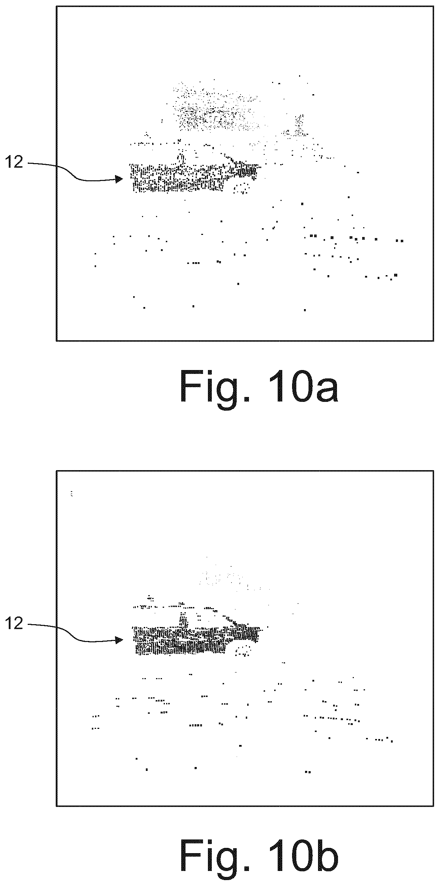

Figures 10a and 10b illustrate the outcome of the interpolation for a real measurement. Figure 10a shows an image of a car 12 that was taken by the device 14 without the interpolation step. Black dots indicate pixels where the range and the velocity have been successfully measured.

Figure 10b shows the image of the same scene, but with the interpolation step and an additional filtering that removes some unwanted range and velocity information. It can be seen that as result of the interpolation step, the number of pixels where the range and the velocity have been successfully measured has increased significantly. The car 12 shown in Figure 10b is represented by many more pixels with measured range and the velocity values so that it can be detected and classified more reliably.

## Claims

1. A LiDAR system (14) for measuring a range and/or a relative velocity to an object (12), comprising
a light source (16) configured to produce light having a varying frequency,
a scanning unit (18) configured to emit the light produced by the light source into different directions, wherein the different directions correspond to pixels in an image of the object, and wherein range and/or velocity information is associated with each pixel in the image,
a detector (32) configured to
detect, for each pixel, an interference of a measuring portion of the light, which was reflected at the object, and a reference portion of the light, which was not reflected at the object, and to
produce, for each pixel, an electrical signal that represents the detected interference,
a computing unit (37) configured to
determine, for each pixel, whether the electrical signal produced by the detector for the pixel is strong enough so that the electrical signal it can be reliably distinguished from a noise floor,
compute, for first pixels for which the electrical signal is strong enough, the range and/or the relative velocity to the object (12) based on the electrical signals that are associated with each of the first pixels, and to
compute, for a second pixel for which the electrical signal is not strong enough, in an interpolation step the range and/or the relative velocity to the object (12) based on one or more electrical signals which are associated with one or more first pixels.

2. The LiDAR system of claim 1, wherein the one or more first pixels relied upon in the interpolation step include a pixel that is spatially closest to the second pixel.

3. The LiDAR system of claim 2, wherein at least two first pixels are relied upon in the interpolation step, and wherein the at least two pixels are the pixels that are spatially closest to the second pixel.

4. The LiDAR system of claim 1, wherein the scanning unit (18) is configured to direct the light produced by the light source along a scan line (44) over the object (12), and wherein the one or more first pixels relied upon in the interpolation step include a pixel that is immediately adjacent to the second pixel on a pixel line that corresponds to the scan line.

5. The LiDAR system of claim 1, wherein the one or more first pixels relied upon in the interpolation step include a pixel that is not spatially closest to the second pixel, but with regard to the time of measurement.

6. The LiDAR system of any of the preceding claims, wherein the computing unit (37) is further configured to compute, if there are at least two first pixels relied upon in the interpolation step, the range and/or the relative velocity to the object (12) for the second pixel based on a mean value of electrical signals which are associated with the at least two first pixels.

7. The LiDAR system of claim 6, wherein the computing unit is further configured not to perform the interpolation step if frequencies of the electrical signals that are associated with the at least two first pixels have a difference or variance which exceeds a predetermined threshold value.

8. The LiDAR system of any of claims 1 to 7, wherein the light source (16) is configured to produce, for each pixel, light having an increasing frequency during an up-chirp interval and a decreasing frequency during a down-chirp interval, and wherein the computing unit is further configured to perform the interpolation step independently for measurements made within the up-chirp interval and within the down-chirp interval

9. A method for measuring the range and/or the relative velocity to an object (12) using a LiDAR system (14), comprising the following steps:
a) producing light having a varying frequency;
b) emitting the light produced by the light source into different directions, wherein the different directions correspond to pixels in an image of the object, and wherein range and/or velocity information is associated with each pixel in the image;
c) detecting, for each pixel, an interference of a measuring portion of the light, which was reflected at the object, and a reference portion of the light, which was not reflected at the object;
d) producing, for each pixel, an electrical signal that represents the detected interference;
e) determining, for each pixel, whether the electrical signal produced in step d) is strong enough so that the electrical signal it can be reliably distinguished from a noise floor;
f) computing, for first pixels for which the electrical signal is strong enough, the range and/or the relative velocity to the object (12) based on the electrical signals that are associated with each of the first pixels;
g) computing, for a second pixel for which the electrical signal is not strong enough, in an interpolation step the range and/or the relative velocity to the object (12) based on one or more electrical signals which are associated with one or more first pixels.

10. The method of claim 8, wherein the one or more first pixels relied upon in the interpolation step include a pixel that is spatially closest to the second pixel.

11. The method of claim 9, wherein at least two first pixels are relied upon in the interpolation step, and wherein the at least two pixels are the pixels that are spatially closest to the second pixel.

12. The method of claim 8, wherein the light is emitted in step b) along a scan line over the object, and wherein the one or more first pixels relied upon in the interpolation step include a pixel that is immediately adjacent to the second pixel on a pixel line that corresponds to the scan line.

13. The method of any of claims 8 to 11, wherein, if there are at least two first pixels relied upon in the interpolation step, the range and/or the relative velocity to the object (12) for the second pixel is computed based on a mean value of electrical signals which are associated with the at least two first pixels.

14. The method of claim 12, wherein the interpolation is not performed if frequencies of the electrical signals that are associated with the at least two first pixels have a difference or variance which exceeds a predetermined threshold value.

15. The method of any of claims 8 to 13, wherein in step a) the light has, for each pixel, an increasing frequency during an up-chirp interval and a decreasing frequency during a down-chirp interval, and wherein the interpolation step is performed independently for measurements made within the up-chirp interval and within the down-chirp interval.
